Europäisches Patentamt

European Patent Office

Office européen des brevets

(11) Veröffentlichungsnummer: **0 026 412**
**B1**

# EUROPÄISCHE PATENTSCHRIFT

(45) Veröffentlichungstag der Patentschrift:
**19.10.83**

(21) Anmeldenummer: **80105646.6**

(22) Anmeldetag: **19.09.80**

(51) Int. Cl.³: **H 04 Q 3/00**, H 04 M 19/00

(54) Schaltungsanordnung zur Verhinderung der nachteiligen Auswirkung von Wechselspannungsanteilen bei der Registrierung des Schaltzustandes in einem insbesondere durch Teilnehmeranschlussleitungen in Fernsprechvermittlungsanlagen gebildeten Schaltkreis.

(30) Priorität: **26.09.79 DE 2938946**

(43) Veröffentlichungstag der Anmeldung:
**08.04.81 Patentblatt 81/14**

(45) Bekanntmachung des Hinweises auf die Patenterteilung:
**19.10.83 Patentblatt 83/42**

(84) Benannte Vertragsstaaten:
**AT BE CH DE FR GB IT LI LU NL SE**

(56) Entgegenhaltungen:
**DE-A-2 542 615**
**FR-A-2 286 573**

(73) Patentinhaber: **SIEMENS AKTIENGESELLSCHAFT,
Berlin und München Wittelsbacherplatz 2,
D-8000 München 2 (DE)**

(72) Erfinder: **Lechner, Robert, Dipl.-Ing., Haldfeldstrasse 5,
D-8156 Otterfing (DE)**

### Schaltungsanordnung zur Verhinderung der nachteiligen Auswirkung von Wechselspannungsanteilen bei der Registrierung des Schaltzustandes in einem insbesondere durch Teilnehmeranschlußleitungen in Fernsprechvermittlungsanlagen gebildeten Schaltkreis

Die Erfindung betrifft eine Schaltungsanordnung der im Gattungsbegriff des Patentanspruchs 1 beschriebenen Art (siehe z. B. FR-A-2 286 573).

Es wird also von einer Anordnung ausgegangen, bei der die einen bestimmten Schaltungszustand in einem Schaltstromkreis zuzuordnenden Potentialzustände festgestellt werden. Dies erfolgt durch eine Auswerteeinheit, die für eine bestimmte Anzahl von Schaltstromkreisen über ein Auswahlschaltglied an entsprechende Schaltungspunkte eines jeden Schaltstromkreises anschaltbar ist. Übersteigt die Anzahl der Abfrageschaltungspunkte die Schrittzahl des Auswahlschaltgliedes, so können diese weiteren Schaltungspunkte in gleicher Weise durch ein oder mehrere zusätzliche Auswahlschaltglieder, die jeweils nach einer bestimmten Zykluszeit erneut wirksam sind, abgefragt werden.

Da die Auswerteeinheit bestimmte Potentialzustände und damit die durch diese Potentialzustände definierten Schaltzustände eines Schaltstromkreises registrieren muß, dürfen Wechselspannungsanteile, die an den Anschaltepunkten auftreten, das Auswerteergebnis nicht verfälschen.

Als Schaltstromkreis, dessen Schaltzustand beurteilt werden soll, kann der in Fernsprechvermittlungsanlagen über die Versorgungsspannungsquelle, die Teilnehmerleitungsschleife und die Teilnehmersprechstelle gebildete Stromkreis betrachtet werden. In einem solchen Fall sind dann beispielsweise die durch Schließen und Öffnen der Teilnehmerleitungsschleife bewirkten unterschiedlichen Schaltzustände der Leitung festzustellen. Dadurch können u. a. die für vermittlungstechnische Funktionen maßgebenden Schaltkennzeichen, beispielsweise die vom Fernsprechteilnehmer abgegebenen Wählimpulskennzeichen, bestimmt werden. Ist für jede Teilnehmersprechstelle innerhalb der ihr amtsseitig zugeordneten Teilnehmeranschlußschaltung eine Speisung über entsprechende Speisewiderstände vorgesehen, so kann der beispielsweise nicht unmittelbar mit dem Pluspol der Versorgungsspannung verbundene Anschlußpunkt des Speisewiderstandes der einen Ader als für die Auswertung maßgebender Anschaltungspunkt herangezogen werden.

Aus diesem Anschaltungspunkt können als Störspannungen Wechselspannungsanteile auftreten, die durch die induktive Kopplung der Teilnehmeranschlußleitung mit anderen Stromleitungen entstehen. Diese Wechselspannungsanteile können aber auch Nutzsignale, wie sie beispielsweise die einzuspeisende Rufwechselspannung darstellt, sein. In jedem Fall muß gewährleistet sein, daß die Auswerteeinheit unter dem Einfluß derartiger Wechselspannungsanteile keinen Schaltungszustand der Leitung registriert, der den tatsächlichen Verhältnissen nicht entspricht.

Es ist die Aufgabe der Erfindung, bei einer Schaltungsanordnung der eingangs genannten Art in raumsparender Weise die Auswertesicherheit zu erhöhen.

Diese Aufgabe wird durch eine Einrichtung mit den im Patentanspruch 1 genannten Merkmalen gelöst.

Im Vergleich zu einem kontinuierlich angeschalteten Kondensator kann bei der im Multiplexbetrieb vorgenommenen Anschaltung für den jeweiligen Kondensator ein Kapazitätswert gewählt werden, der bei einer Anzahl von n zu bewertenden, mittels des integrierten Selektors ausgewählten Anschaltungspunkten um den Faktor $1/n$-tel verringert ist.

Dies gilt unter der Voraussetzung, daß die Frequenz der auszuschaltenden Wechselspannungsanteile kleiner ist als die Abtastfrequenz. Der Kondensator wird also nach Ablauf derjenigen Zeit, nach der eine erneute Abfrage des gleichen Schaltungspunktes vorgenommen wird, jeweils wieder wirksam in den Eingangskreis des auszuwertenden Komparators eingeschaltet. Für den Fall, daß der jeweilige Kondensator nur einen Bruchteil derjenigen Zeitspanne, die für jede Abfrage eines Schaltungspunktes innerhalb der durch den Selektor zusammengefaßten Gruppe von Schaltungspunkten zur Verfügung steht, wirksam angeschaltet ist, kann der Kapazitätswert noch weiter verringert werden. Dadurch ergibt sich die Möglichkeit, die Kondensatoren bei der Wahl der entsprechenden Technologie als integrierte Einheiten in den gleichfalls integrierten Schaltungsaufbau unmittelbar einzubeziehen. Bei der Wahl dieser reduzierten Abtastzeitspanne ist zu beachten, daß der diesbezügliche Kapazitätswert größer sein muß als die vorhandene Eingangskapazität des integrierten Selektors. Dieser kann ein handelsüblicher Multiplexer sein.

Bei der in einem bestimmten Zyklus erfolgenden wirksamen Schaltung eines Kondensators ergibt sich eine virtuelle Zeitkonstante, die im Hinblick auf die erforderliche Siebung zumindest derjenigen Siebwirkung entspricht, die sich bei kontinuierlicher Anschaltung für einen Kondensator mit n-fach größerem Kapazitätswert ergibt. Der maximale Wert des im Eingangskreis des Komparators vorhandenen ohmschen Widerstandes, der das gemeinsame Teilglied des jeweils mit den einzelnen Kondensatoren gebildeten Siebgliedes darstellt, wird durch die feststehenden Eingangsbedingungen des verwendeten Komparators bestimmt. Dieser Wert für diesen Widerstand ist somit im wesentlichen durch die maximal zulässigen Offsetfehler am Komparator gegeben.

Gemäß einer Weiterbildung der Erfindung können die zu beurteilenden Schaltzustände jeweils einen von zwei Potentialbereichen zugeordnet sein, wobei der Wechsel von dem einen zu dem anderen Potentialbereich sprunghaft erfolgt. Für den Komparator ist ein diese beiden Potentialbereiche trennender Schwellwert vorgegeben. Der Komparator trifft dann die Feststellung, ob der am jeweiligen Schaltungspunkt bei der Abfrage vorhandene Spannungswert oberhalb oder unterhalb dieses Schwellwertes liegt.

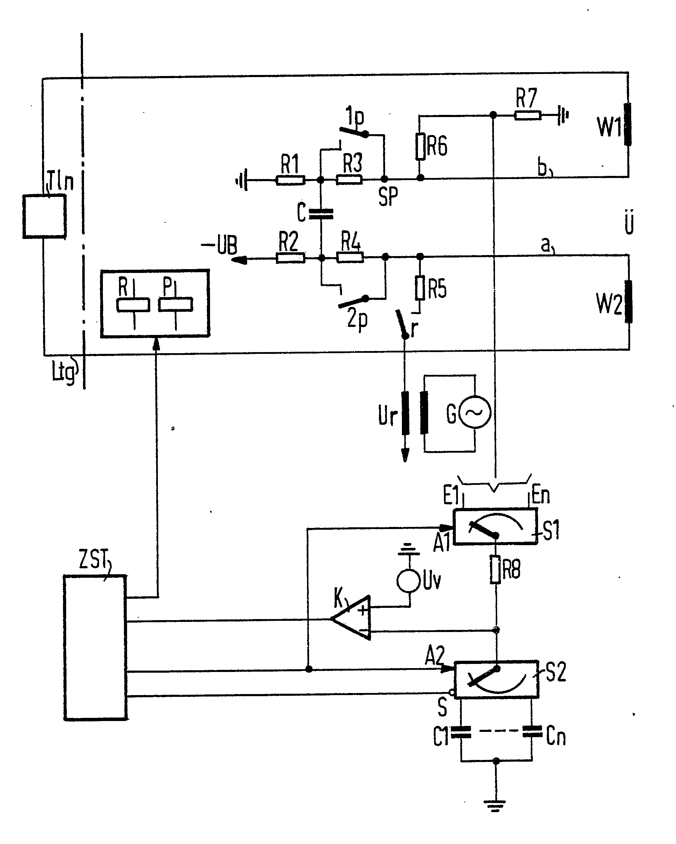

Nachstehend wird die Erfindung unter Bezugnahme auf die Zeichnung näher erläutert.

Sie zeigt den grundsätzlichen Schaltungsaufbau für die ohne nachteilige Beeinflussung durch Wechselspannungsanteile vorzunehmende Bewertung des Schaltzustandes an bestimmten Schaltungspunkten eines Schaltstromkreises.

In der Figur sind lediglich die zum Verständnis der Erfindung notwendigen Bauelemente bzw. Baueinheiten gezeigt. Der Schaltstromkreis, dessen Schaltzustand beurteilt werden soll, stellt im Ausführungsbeispiel eine Teilnehmerleitungsschleife dar. Die zur Teilnehmerstelle Tnl führende Teilnehmeranschlußleitung Ltg ist über die Wicklungen w1 bzw. w2 eines Übertragers Ü mit der Speiseschaltung, die einen Teil der für jeden Teilnehmer amtsseitig vorhandenen Teilnehmeranschlußschaltung bildet, verbunden. Diese Leitungsschleife kann durch den Teilnehmer an der Sprechstelle geöffnet oder geschlossen werden. Die Speiseschaltung für eine niederohmige Speisung besteht aus den beiden Speisewiderständen R1 und R2, wobei der Widerstand R1 in die an Erdpotential liegende Ader, die b-Ader, und der Widerstand R2 in die an Speisepotential liegende Ader, die a-Ader, der Teilnehmeranschlußleitung eingefügt ist. In jeder Ader kann ein weiterer Widerstand R3 bzw. R4 liegen, der durch einen Kontakt 1p bzw. 2p unwirksam schaltbar ist. Im geöffneten Zustand dieser Kontakte besteht damit die Möglichkeit, eine hochohmige Speisung anzubieten. Der hochohmige Speisezustand kann beispielsweise für den Ruhezustand gewählt werden. Erst zu dem Zeitpunkt, zu dem eine niederohmige Speisung erforderlich ist, werden dann die Widerstände R3 und R4 durch Schließen der Kontakte p1 und p2 überbrückt. Dies kann beispielsweise dann erfolgen, wenn für eine Teilnehmerstelle der durch Abheben des Handapparates bewirkte Schleifenschluß erkannt wurde. Ausgehend von einer niederohmigen Speisung im Gesprächszustand kann in den Fällen, in denen durch eine entsprechende Überwachungsschaltung die mögliche Gefahr einer Überlastung für im Speisestromkreis liegende Schaltkreiselemente signalisiert wird, die Speiseschaltung hochohmig geschaltet werden. Dadurch soll dann der Speisestrom so weit reduziert werden, daß keine Überlastung auftreten kann. Amtsseitig wird in der teilnehmerindividuellen Anschlußschaltung auch die Rufeinspeisung ermöglicht. Vermittels des Übertragers Ur wird ein zentraler Rufgenerator G, der eine Wechselspannung mit der Ruftonfrequenz liefert, mit dem Schließen des Kontaktes r an die Teilnehmeranschlußleitung angekoppelt. Die Sekundärwicklung dieses Übertragers liegt einerseits am negativen Pol der speisenden Gleichspannungsquelle und andererseits bei geschlossenem Kontakt r über den Widerstand R5 an der a-Leitungsader. Mit dem Zeitpunkt der Einspeisung des Rufsignals, das also aus der von einer Wechselspannung überlagerten Gleichspannung besteht, soll der Kontakt 2p geöffnet sein. Dadurch wird der fließende Rufstrom weder durch den über die Speisewiderstände gelieferten Speisestrom wesentlich beeinträchtigt, noch kann er über den Kondensator C abfließen, da die Widerstände R3 und R4 voraussetzungsgemäß hochohmig sein sollen. Zur Steuerung der Kontakte r und der Kontakte 1p bzw. 2p ist eine entsprechende Relaissteuerung für die Relais R und P, denen die erwähnten Kontakte zugeordnet sind, vorhanden. Die Steuersignale für die jeder Teilnehmeranschlußschaltung zugehörigen Relais P und R liefert jeweils, wie in der Figur angedeutet, eine zentrale Steuereinrichtung ZST. In der Figur ist lediglich die Verbindung des Gabelübertragers Ü mit der Speiseanordnung und der jeweiligen Teilnehmerstelle dargestellt. Diejenigen Wicklungen, die die 4-Drahtseite des Übertragers, der u. a. die Gleichstromwege der rufenden und gerufenen Teilnehmerstelle entkoppelt, bilden, sind nicht gezeigt.

Im Ausführungsbeispiel soll der Potentialzustand am Punkt SP beurteilt werden. Durch den Selektor S1 kann eine der Anzahl seiner Eingänge E1 bis En entsprechende Anzahl derartiger Schaltungspunkte, die jeweils mit einem dieser Eingänge gekoppelt sind, abgefragt werden. Dies erfolgt nicht unmittelbar an dem genannten Schaltungspunkt, sondern an dem Teilerpunkt eines Spannungsteilers, der die auftretenden Spannungen in eine durch den integrierten Selektor zu verarbeitende Größenordnung herabsetzt. Diese für jede Leitung innerhalb der Teilnehmeranschlußschaltung vorhandenen Widerstände sind für den dargestellten Leitungskreis die Widerstände R6 und R7. Die Durchschaltung der an den jeweiligen Eingängen E1 bis En des Selektors S1 anliegenden Information erfolgt dadurch, daß beispielsweise eine binär codierte Adresse an die Adresseneingänge A1 angelegt wird. Durch eine entsprechende fortlaufende Adressierung können dann beispielsweise die einzelnen Eingänge unmittelbar aufeinanderfolgend für diese Durchschaltung ausgewählt werden. Nach der Anschaltung des n-ten Schaltungspunktes durch wirksame Auswahl des Eingangs En kann sich in gleicher Weise die Anschaltung anderer, jeweils zu einer gleichartigen Gruppe zusammengefaßter Schaltungspunkte anschließen. Nach Ablauf der vorgesehenen Zykluszeit erfolgt somit die erneute Abfrage ein und derselben Gruppe bzw. ein und desselben Anschlußpunktes SP innerhalb einer durch die Anzahl der möglichen Eingänge des Selektors zahlenmäßig definierten Gruppe. Die Häufigkeit der einzelnen Abfragevorgänge für jeweils einen Schaltungspunkt SP ist dabei so zu wählen, daß im Falle der Abfrage einer Anschlußleitung die kürzestmögliche Änderung im Schaltzustand mit der geforderten Sicherheit festgestellt werden kann.

Unabhängig davon, in welchem Betriebszustand sich die jeweilige Teilnehmeranschlußleitung befindet, treten an den Speisewiderständen, beispielsweise an den Speisewiderstand R1 oder an dem aus der Reihenschaltung von R1 und R3 gebildeten Speisewiderstand unterschiedliche Potentialverhältnisse auf. Dadurch können u. a. Schaltkennzeichen, wie sie z. B. die vom Teilnehmer abgegebenen Wahlimpulse darstellen, durch eine entsprechende Spannungsauswertung festgestellt werden. Dies erfolgt durch einen Komparator K, an dessen einen Eingang mittels des Selektors S1 die an den einzelnen, durch diesen Selektor auswählbaren Schaltungspunkten vorhandenen Potentiale angelegt werden. Dem anderen Eingang wird eine Vergleichsspannung Uv zugeführt. Diese Vergleichsspannung wird so gewählt, daß damit die beispielsweise dem offenen und dem geschlossenen Zustand der Teilnehmerleitungsschleife zuzuordnenden Bereiche eindeutig voneinander zu trennen sind. Je nachdem, ob die über die Selektorschaltung zum jeweiligen Abfragezeitpunkt zugeführte Meßspannung oberhalb oder unterhalb dieser vorgegebenen Vergleichsspannung liegt, entsteht ein unterschiedliches Ausgangssignal des Komparators. Dieses jeweilige Ausgangssignal kann beispielsweise zur Charakterisierung einer der geschlossenen Leitungsschleife zuzuordnenden Meßspannung dem Logikpotential 1 entsprechen. Im Falle der offenen Leitungsschleife wird als Abfrageergebnis am Ausgang des Komparators ein dem Logikpotential 0 entsprechendes Signal entstehen. Die Ausgangssignale des Komparators werden einer zentralen Steuereinrichtung ZST zugeführt, die dann die an die jeweiligen Ausgangssignale anzuknüpfenden Prozeduren veranlaßt.

Es müssen Maßnahmen getroffen werden, daß die Wechselspannungsanteile, die an den einzelnen Schaltungspunkten SP auftreten, den Auswertevorgang nicht derart beeinflussen, daß dadurch eine die tatsächlichen Verhältnisse verfälschende Aussage des bewertenden Komparators K entsteht. Derartige Wechselspannungsanteile können beispielsweise durch die Kopplung mit einer Starkstromleitung hervorgerufene Störwechselspannungen oder auch Nutzsignale, beispielsweise in Form der der Gleichspannung überlagerten Rufwechselspannung sein. Es muß gewährleistet sein, daß die Rufwechselspannung für sich kein Ausgangssignal des Komparators bewirkt, das dem entspricht, das sich ausschließlich beim Schließen der Leitungsschleife ergeben sollte. Ein hinsichtlich der eingekoppelten Störwechselspannungen besonders kritischer Fall ist während des erläuterten hochohmigen Speisezustandes der jeweiligen Anschlußleitung gegeben. Um beispielsweise in den genannten Betriebszuständen eine nachteilige Auswirkung überlagerter Wechselspannungsanteile auszuschließen, wird mit jeder Abfrage eines Schaltungspunktes SP durch einen, synchron mit dem Selektor S1 jeweils weitergeschalteten, zusätzlichen Selektor S2 ein Kondensator C1 bis Cn an den Eingangskreis des Komparators wirksam angeschaltet. Der jeweils eingeschaltete Kondensator bildet dann mit dem gemeinsamen Widerstand R8 ein Siebglied mit Tiefpaßcharakteristik. Der Kondensator liegt demnach nicht kontinuierlich im Eingangskreis einer Auswerteeinheit, sondern er ist höchstens für diejenige Zeitspanne wirksam, die für den jeweiligen Abfragevorgang vorgesehen ist. Erst nach Ablauf der vorgegebenen Zykluszeit wird dann der betreffende Kondensator erneut im Eingangskreis des Komparators für die notwendige Siebung herangezogen. Unter der Voraussetzung, daß die Frequenz der auszuschaltenden Wechselspannungsanteile kleiner als die Abtastfrequenz ist, kann gegenüber dem Fall, daß ein Kondensator kontinuierlich angeschaltet ist, der Kapazitätswert eines jeden Kondensators bei n Abfragestellungen mindestens um den Faktor 1 zu n verringert werden. Die sich einstellende Siebwirkung wird dadurch jedoch nicht eingeschränkt. Es ergibt sich als für die Siebwirkung maßgebende Zeitkonstante eine virtuelle Zeitkonstante, die um einen sich aus dem Verhältnis von Zykluszeit zu Abfragezeitspanne gegebenen Faktor vergrößert ist. Der maximale Wert für den Widerstand R8, der allen Kondensatoren C1 bis Cn gemeinsam ist, wird durch die aufgrund der Bauteileeigenschaften vorgegebenen Eingangsbedingungen des Komparators bestimmt.

Beträgt die Zeit, in der der jeweilige Kondensator wirksam ist, nur einen Bruchteil der Abfragezeitspanne, so kann der Kapazitätswert eines jeden Kondensators bei gleichem Siebfaktor noch weiter verringert werden. Dadurch ergibt sich dann die Möglichkeit, die einzelnen notwendigen Kondensatoren nicht mehr in Form eines diskreten Bauelementes zu verwenden, sondern diese können unmittelbar in die Schaltung einintegriert werden. Es ist zu beachten, daß der dann maßgebende Kapazitätswert größer sein muß als die Schalterkapazität des verwendeten integrierten Selektors.

Die synchrone Weiterschaltung der beiden Selektoren S1 bzw. S2 in die einzelnen Schaltstellungen wird durch eine die beiden Selektoren in gleicher Weise betreffenden fortlaufende Adressierung durch die zentrale Steuereinrichtung ZST sichergestellt. Sie kann auch für den Selektor S2 über einen entsprechenden Sperr- bzw. Freigabeeingang S derart gesteuert werden, daß die wirksame Durchschaltung des Eingangs zu den einzelnen Ausgängen des als Demultiplexer betriebenen Selektors S2 nur ein Bruchteil derjenigen Zeitspanne beträgt, die für jede Schaltstellung des Multiplexers S1 vorgesehen ist.

## Patentansprüche

1. Schaltungsanordnung zur Verhinderung der nachteiligen Auswirkungen von der Nutzgleichspannung überlagerten Wechselspannungsanteilen bei der Auswertung des jeweiligen Schaltzustandes in Gleichstromschaltkreisen, wobei diese Schaltzustände durch die Registrierung der zu charakterisierenden Potentialzustände an fest vorgegebenen Schaltungspunkten durch eine Auswerteeinheit in Form eines Komparators (K), die einer Mehrzahl von zu einer Gruppe zusammengefaßten Schaltstromkreisen gemeinsam ist, feststellbar sind, und die Schaltungspunkte mittels eines Selektors (S1) in zyklischer Folge und innerhalb einer Gruppe zeitlich nacheinander an die zugeordnete Auswerteeinheit wirksam angeschaltet werden, insbesondere für Teilnehmeranschlußleitungen in Fernsprechvermittlungsanlagen, die unter Einbeziehung der amtsseitigen Speiseschaltung und der Teilnehmersprechstelle einen der genannten Schaltstromkreise bilden, dadurch gekennzeichnet, daß über einen zu dem genannten Selektor (S1) synchron in die jeweiligen Auswahlstellungen gesteuerter weiterer Selektor (S2) ein jedem Schaltkreis individuell zugeordneter kapazitiver Widerstand (C1 bis Cn) über ein und demselben ohmschen Eingangswiderstand (R8) zur Bildung eines die Wechselspannungsanteile ausfilternden Siebgliedes im Eingangskreis des Komparators (K) für eine im Grenzfall jeweils der Anschaltezeitspanne entsprechenden Zeit zur Wirkung kommt, wobei die Zykluszeit kleiner als die Periodenzeit der zu dämpfenden Wechselspannungsanteile gewählt ist und sowohl die Selektoren als auch der Komparator in integrierter Schaltkreistechnik aufgebaut ist.

2. Schaltungsanordnung nach Anspruch 1, dadurch gekennzeichnet, daß die Schaltzustände jeweils einem von zwei Potentialbereichen zugeordnet sind, wobei ein sprunghafter Wechsel von einem Potentialbereich in den anderen Potentialbereich zugrunde gelegt ist und daß für den Komparator ein die Potentialbereiche trennender Schwellwert vorgegeben ist.

## Claims

1. A circuit for preventing the adverse effects of AC-voltage components, which are superimposed on the DC-signal voltage when the relevant circuit condition of DC-circuits is evaluated, the said circuit conditions being defineable by recording the potential states, which are to be characterised at given sampling points, with evaluating means in the form of a comparator (K), common to a plurality of circuits which are combined into a group and by means of a selector (S1) the circuit positions are effectively connected in cyclic sequence and successively with respect to time and within one group to the associated evaluating means, more particularly for subscriber lines in telephone exchange systems which form one of the said circuits and include the exchange feed circuit and the subscriber telephone station, characterised in that by means of a second selector (S2), driven in synchronism with the first selector (S2), a capacitative reactance (C1 to Cn), individually associated with each circuit, is brought into operation, for a time which corresponds in each case to the connecting time, via one and the same active resistance (R8) to form a filter element which is connected to the input circuit of the comparator (K) and is adapted to filter out the AC-component, the cycle time being selected so as to be less than the period of the AC-components which are to be attenuated and the selectors as well as the comparator are constructed in accordance with integrated circuit technology.

2. A circuit according to claim 1, characterised in that each of the circuit states is associated with one of two potential regions, based on a step response change from one potential region to the other, and that a threshold value, which separates the potential regions, is specified for the comparator.

## Revendications

1. Montage pour empêcher les effets défavorables de composantes d'un courant alternatif superposées à la tension continue utile lors de l'évaluation de l'état de commutation dans des circuits de commutation à courant continu, du type dans leqeul ces états de commutation sont susceptibles d'être déterminés par l'enregistrement des états de potentiel à caractériser au niveau de points prédéterminés du montage, à l'aide d'une unité d'évaluation se présentant sous la forme d'un comparateur (K) et qui est commun à plusieurs circuits de commutation rassemblés en un groupe, et les points du montage étant, suivant une suite cyclique et successive dans le temps à l'intérieur d'un groupe, branchés efficacement à l'unité d'évaluation associée à l'aide d'un sélecteur (S1), en particulier pour des lignes d'abonnés dans des centraux téléphoniques, qui forment, y compris le circuit d'alimentation situé du côté central et le poste d'abonné, l'un desdits circuits de commutation, caractérisé par le fait qu'un second sélecteur (52) commandé en synchronisme avec ledit sélecteur (S1) dans les position de sélection considérées, une résistance capacitive (C1 à Cn) associée individuellement à chaque circuit de commutation devient opérante, pour une durée qui dans le cas limite correspond respectivement à la durée de branchement, par l'intermédiaire d'une seule et même résistance d'entrée (R8), pour la formation d'un élément de filtre dans le circuit d'entrée du comparateur (K), capable de filtrer les composantes de tension alternative, la durée du cycle étant choisie pour être inférieure à la durée de la période des composantes de tension alternative à atténuer, et les sélecteurs, de même que le comparateur étant réalisés selon la technique des circuits de commutation intégrée.

2. Montage selon la revendication 1, caractérisé par le fait que les états de commutation sont respectivement associés à l'une de deux plages de potentiel, un changement brutal d'une plage de potentiel à l'autre plage de potentiel étant envisagé, et que pour le comparateur, il est prévu une valeur de seuil séparant les plages de potentiel.